# FASCICULE DE BREVET EUROPEEN

(11) **EP 3 720 729 B1**
(45) Date de publication et mention de la délivrance du brevet: **15.02.2023**
(21) Numéro de dépôt: 18827155.5
(22) Date de dépôt: 09.11.2018
(51) Int. Cl.: B60K 1/00, B60K 1/04

(54) **VEHICULE ELECTRIQUE OU HYBRIDE COMPORTANT UN PONTET DE RIGIDIFICATION D'UN BLOC DE MODULES DE BATTERIES**
ELEKTRO- ODER HYBRIDFAHRZEUG MIT EINER BRÜCKE ZUR VERSTEIFUNG EINES BATTERIEMODULBLOCKS
ELECTRIC OR HYBRID VEHICLE COMPRISING A BRIDGE FOR STIFFENING A BATTERY MODULE BLOCK

(30) Priorité: 08.12.2017 FR 1761849
(43) Date de publication de la demande: 14.10.2020
(73) Titulaire: PSA Automobiles SA, 78300 Poissy (FR)
(72) Inventeur: HADDI-DEBLOOS, Aurelien, 78140 VELIZY VILLACOUBLAY (FR)
(86) Numéro de dépôt international: PCT/FR2018/052798
(87) Numéro de publication internationale: WO 2019/110881

(56) Documents cités:
- EP-A1- 2 425 998
- WO-A1-2011/154790
- DE-A1-102011 119 540
- FR-A1- 2 942 762
- US-A1- 2013 126 254
- US-A1- 2014 338 999
- US-B1- 9 533 600

## Description

La présente invention concerne un véhicule électrique ou hybride équipé de modules de batterie disposés sous le coffre arrière.

Les véhicules hybrides ou électriques comportent un ensemble de modules de batterie électrique reliés entre eux en formant un bloc, permettant de stocker une quantité d'énergie assurant une réduction de consommation de carburant pour les véhicules hybrides, et une autonomie pour les véhicules électriques.

Les modules de batterie sont généralement regroupés pour former un ensemble sensiblement plat, qui est posé au niveau du plancher du véhicule afin de limiter son encombrement et d'abaisser le centre de gravité de ce véhicule.

On connait par exemple du document de brevet FR-A1-2942762 une structure de caisse de véhicule automobile qui présente un logement d'un élément de stockage d'énergie intégré à la structure.

Un type de véhicule automobile connu, présenté notamment par le document US-B1-9533600, comporte un ensemble de modules formant un plateau fixé sous le plancher du véhicule, rigidifié par des longerons et des traverses. Les modules de batterie sont posés sur un plateau de refroidissement recevant une circulation d'eau afin de réguler leurs températures.

Le contrôle de la température des modules de batterie est important, en particulier pour certaines technologies comme les batteries au lithium-ion, afin d'éviter des échauffements qui peuvent les endommager, ou même causer des incendies.

Certains véhicules hybrides ou électriques comportent un ensemble de modules de batterie disposés sous le plancher du coffre arrière, comprenant deux couches de modules séparées par un plateau de refroidissement. Afin d'augmenter le nombre de modules, la couche inférieure peut se prolonger vers l'avant par un module de batterie centrale, qui est alors disposé dans un volume généralement réservé pour les pieds des passagers arrière du véhicule.

En cas de choc arrière sur le véhicule, on a constaté que l'effort est transmis à l'ensemble de modules sous le plancher du coffre, ces modules ayant tendance à se soulever en générant une déformation du plateau de refroidissement. Ce plateau de refroidissement peut se détériorer en entraînant alors un risque d'échauffement des modules de batteries, qui peut générer des problèmes plus graves.

La présente invention a notamment pour but d'éviter ces inconvénients de la technique antérieure.

Elle propose à cet effet un véhicule électrique ou hybride équipé d'un bloc de modules de batterie disposé sous le coffre arrière, ce bloc comprenant une couche inférieure de modules recevant au-dessus un plateau de refroidissement présentant une circulation de fluide de refroidissement, cette couche inférieure fixée sur un plancher du véhicule, se prolongeant au milieu du véhicule par un module saillant dépassant du bloc dans la direction avant du véhicule, ce véhicule étant remarquable en ce qu'il comporte un pontet de rigidification disposé dans la direction transversale du véhicule, passant au-dessus du module saillant, dont les extrémités sont fixées au plancher, ce pontet de rigidification comportant de chaque côté un montant présentant une embase disposée dans un plan horizontal.

Un avantage de ce véhicule est que de manière simple et efficace, avec un pontet qui peut être réalisé avec un coût réduit, on ajoute une fixation rigide de l'avant du bloc de modules qui empêche son soulèvement en cas de choc à l'arrière du véhicule. On protège de cette manière le plateau de refroidissement disposé au-dessus de la couche de base de modules, ce qui évite des problèmes consécutifs aux chocs.

Le véhicule suivant l'invention peut de plus comporter une ou plusieurs des caractéristiques suivantes, qui peuvent être combinées entre elles.

Dans ce cas, avantageusement, chaque embase comporte un perçage recevant une vis de fixation sur le plancher.

Selon un mode de réalisation, le pontet de rigidification est formé par une seule pièce.

Dans ce cas, avantageusement, le pontet de rigidification est formé par un moulage d'un alliage d'aluminium.

Selon un autre mode de réalisation, le pontet de rigidification est formé par plusieurs tôles assemblées entre elles.

Dans ce cas, avantageusement, le pontet de rigidification comporte une barre supérieure horizontale formée dans une première tôle, fixée à chaque extrémité à un montant formé par une autre tôle.

En particulier, la barre supérieure et chaque montant peuvent comporter une tôle pliée dans la longueur, présentant une partie disposée dans un plan vertical suivant la direction transversale du véhicule, et une partie tournée vers l'avant.

Avantageusement, les tôles du pontet de rigidification sont assemblées entre elles par soudure.

Avantageusement, le pontet de rigidification est disposé dans un plan vertical, au-dessus du module saillant, dans l'alignement des faces avant des modules à l'avant de la couche inférieure.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 présente le plancher d'un véhicule électrique selon l'invention, comportant des modules de batteries disposés dessus ;
- la figure 2 est une vue de détail du pontet de rigidification de ce véhicule ; et
- les figures 3 et 4 présentent un pontet de rigidification suivant une variante.

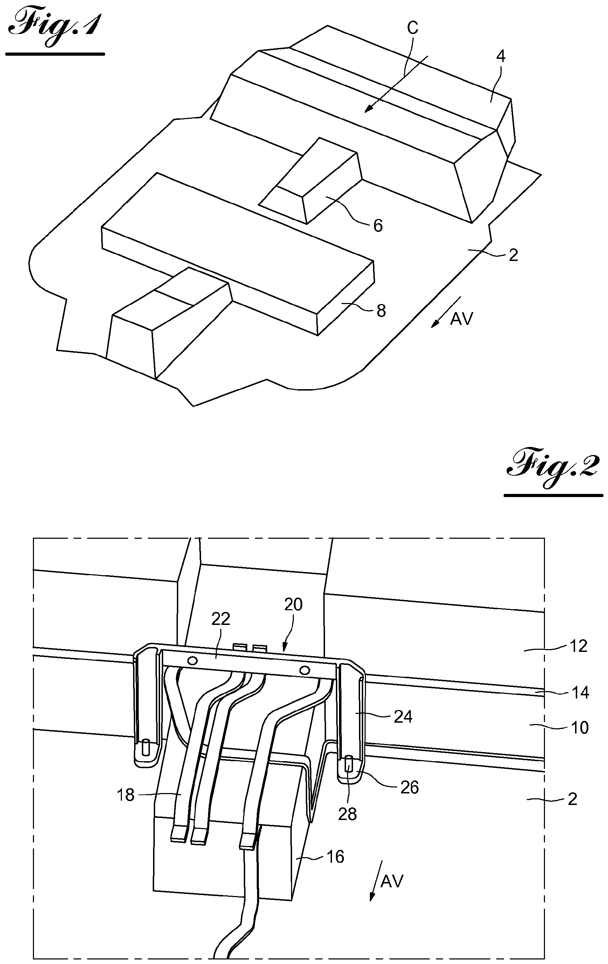

Les figures 1 et 2 présentent un plancher de véhicule électrique 2, comportant un côté avant indiqué par la flèche AV, recevant un bloc de modules électriques arrière 4 disposé sous le plancher du coffre de ce véhicule, et un bloc de modules électriques avant 8 disposé sous le siège du conducteur et du passager avant.

Les deux blocs arrière 4 et avant 8 sont couverts chacun par un capot. Le bloc arrière 4 se prolonge vers l'avant par une excroissance longitudinale 6 disposée suivant l'axe médian du véhicule, permettant à deux passagers arrière de poser leurs pieds chacun d'un côté de cette excroissance.

De cette manière, on optimise l'occupation des espaces vers le bas de l'habitacle, afin d'obtenir un grand nombre de modules stockant une quantité d'énergie électrique.

Le bloc arrière 4 comporte une couche de modules inférieurs 10 recevant au-dessus un plateau de refroidissement 14, comprenant une circulation de liquide de refroidissement. Un module saillant vers l'avant 16 disposé dans l'excroissance longitudinale 6, comporte sa partie arrière insérée entre deux modules inférieurs 10 disposés transversalement.

Le module saillant 16 comporte des barrettes de connexions électriques plates 18, fixées au-dessus de ce module et sur les côtés, permettant de relier entre elles les différentes bornes des modules afin de transmettre le courant électrique.

A l'avant du bloc arrière 4, sur chaque module inférieur 10 disposé de chaque côté du module saillant 16, un module supérieur 12 est posé au-dessus du plateau de refroidissement 14. De cette manière, le plateau de refroidissement 14 contribue au refroidissement des modules 10, 12, 16 posés sur chacune de ses faces.

L'ensemble des modules du bloc arrière 4 est fixé sur le plancher 2.

Lors d'un choc arrière sur le véhicule transmis au bloc arrière 4, présenté par la flèche C, on a constaté une remontée du module saillant 16, qui applique des contraintes importantes sur le plateau de refroidissement 14 disposé au-dessus.

Un pontet de rigidification 20 forme un « U » comprenant une barre supérieure 22 plate disposée transversalement dans le véhicule, dans un plan vertical, qui est posée au-dessus du module saillant 16, dans l'alignement des faces avant des modules inférieurs 10 disposés à l'avant du bloc 4.

La barre supérieure 22 se prolonge de chaque côté par un montant vertical 24, présentant sur chacun de ses bords une nervure longitudinale pour le raidir. La base de chaque montant 24 forme un pli tourné vers l'avant, pour constituer une embase horizontale 26 présentant un perçage, recevant une vis 28 traversant le plancher 2, afin de se fixer dessus.

Le pontet de rigidification 4 peut être formé en particulier par le moulage d'un alliage d'aluminium injecté sous pression, permettant de réaliser de manière économique des formes complexes comprenant les nervures. On obtient de cette manière un pontet 20 fortement rigide, plaqué au-dessus du module saillant 16 pour résister à une traction verticale. Lors d'un choc arrière sur le véhicule, le pontet 20 maintient l'avant du bloc arrière 4 en évitant sa remontée, et protège en particulier le plateau de refroidissement 14 disposé au-dessus des modules inférieurs 10.

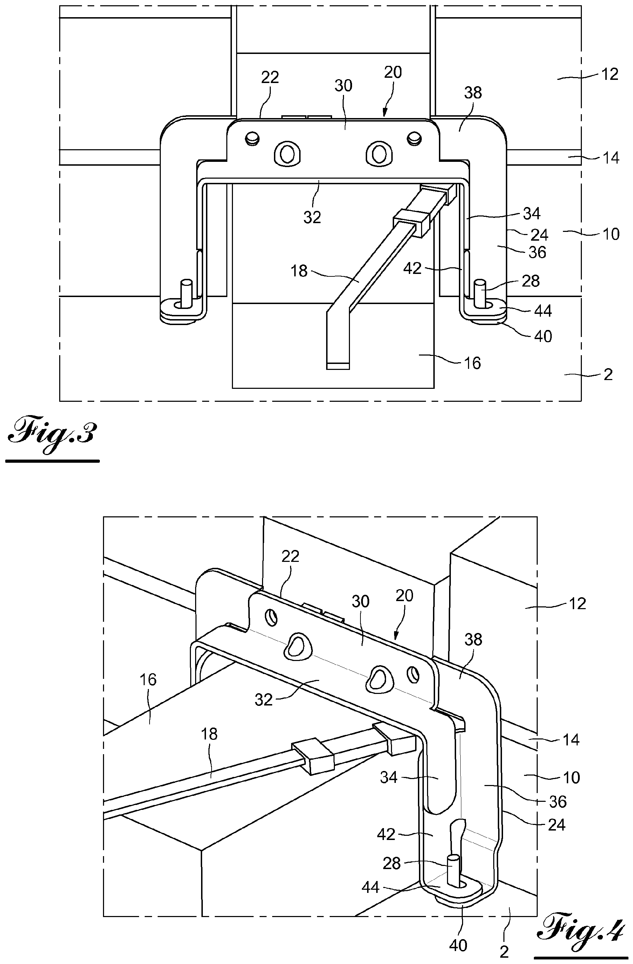

Les figures 3 et 4 présentent un pontet 20 formé par des tôles pliées et assemblées entre elles.

Une première tôle pliée dans sa longueur forme une bande constituant la barre supérieure 22, comprenant une aile verticale 30 dont la base se prolonge après un pli par une aile horizontale 32 tournée vers l'avant. Chaque extrémité de cette aile horizontale 32 se termine après un pli par une patte verticale 34, venant sur le côté du module saillant 16.

De chaque côté le montant 24 formé dans une tôle pliée dans sa longueur, comporte une partie plate disposée dans un plan vertical transversal 36, formant en haut une courbe tournée vers l'axe médian du véhicule 38, pour venir se fixer par soudure derrière l'aile verticale 30 de la barre supérieure 22, et forme en bas un pli tourné vers l'avant pour former une couche inférieure horizontale d'embase 40.

Vers l'axe médian du véhicule, la partie plate transversale 36 du montant 24, se prolonge après un pli par une partie verticale tournée vers l'avant 42, venant sur le côté du module saillant 16. De chaque côté, la patte verticale 34 de la barre supérieure 22 se superpose sur la partie tournée vers l'avant 42 du montant 24, pour être fixée dessus par soudure.

La partie verticale tournée vers l'avant 42 de chaque montant 24 comporte en bas un pli tourné vers l'extérieur du véhicule, pour former une couche supérieure d'embase 44 qui est superposée sur la couche inférieure d'embase 40. Les deux couches d'embase 40, 44 superposées, comportent un perçage recevant la vis de fixation 28 sur le plancher 2 du véhicule.

On réalise de manière simple et économique, par une découpe et un pliage de tôles, un pontet fortement rigidifié par les différents plis, qui est fixé à ses extrémités au plancher du véhicule 2.

## Revendications

1. Véhicule électrique ou hybride équipé d'un bloc (4) de modules de batterie (10, 12, 16) disposé sous le coffre arrière, ce bloc (4) comprenant une couche inférieure de modules (10) recevant au-dessus un plateau de refroidissement (14) présentant une circulation de fluide de refroidissement, cette couche inférieure (10) fixée sur un plancher du véhicule (2), se prolongeant au milieu du véhicule par un module saillant (16) dépassant du bloc (4) dans la direction avant du véhicule, **caractérisé en ce qu'**il comporte un pontet de rigidification (20) disposé dans la direction transversale du véhicule, passant au-dessus du module saillant (16), dont les extrémités sont fixées au plancher (2), ce pontet de rigidification (20) comportant de chaque côté un montant (24) présentant une embase (26, 40, 44) disposée dans un plan horizontal.

2. Véhicule selon la revendication 1, **caractérisé en ce que** chaque embase (26, 40, 44) comporte un perçage recevant une vis de fixation (28) sur le plancher (2).

3. Véhicule selon l'une quelconque des revendications, **caractérisé en ce que** le pontet de rigidification (20) est formé par une seule pièce.

4. Véhicule selon la revendication 3, **caractérisé en ce que** le pontet de rigidification (20) est formé par un moulage d'un alliage d'aluminium.

5. Véhicule selon l'une quelconque des revendications 1 à 2, **caractérisé en ce que** le pontet de rigidification (20) est formé par plusieurs tôles assemblées entre elles.

6. Véhicule selon la revendication 5, **caractérisé en ce que** le pontet de rigidification (20) comporte une barre supérieure horizontale (22) formée dans une première tôle, fixée à chaque extrémité à un montant (24) formé par une autre tôle.

7. Véhicule selon la revendication 6, **caractérisé en ce que** la barre supérieure (22) et chaque montant (24) comportent une tôle pliée dans la longueur, présentant une partie disposée dans un plan vertical suivant la direction transversale du véhicule (30, 36), et une partie tournée vers l'avant (32, 42).

8. Véhicule selon l'une quelconque des revendications 5 à 7, **caractérisé en ce que** les tôles du pontet de rigidification (20) sont assemblées entre elles par soudure.

9. Véhicule selon l'une quelconque des revendications précédentes, **caractérisé en ce que** le pontet de rigidification (20) est disposé dans un plan vertical, au-dessus du module saillant (16), dans l'alignement des faces avant des modules à l'avant de la couche inférieure (10).

## Patentansprüche

1. Elektro- oder Hybridfahrzeug, das mit einem Block (4) von Batteriemodulen (10, 12, 16) ausgestattet ist, die unter dem hinteren Kofferraum angeordnet sind, wobei dieser Block (4) eine untere Schicht von Modulen (10) umfasst, die oben eine Kühlung (14) aufnimmt, die a Zirkulation von Kühlflüssigkeit, wobei diese untere Schicht (10) an einem Boden des Fahrzeugs (2) befestigt ist und sich in der Mitte des Fahrzeugs durch ein vorstehendes Modul (16) erstreckt, das von dem Block (4) in Richtung Fahrzeugvorderseite vorsteht, **dadurch gekennzeichnet, dass** es eine in Querrichtung des Fahrzeugs angeordnete Versteifungsbrücke (20) umfasst, die oberhalb des vorstehenden Moduls (16) verläuft, dessen Enden am Boden (2) befestigt sind, wobei diese Brückenversteifung (20) umfasst auf jeder Seite ein Pfosten (24) mit einem Sockel (26, 40, 44) angeordnet in einer horizontalen Ebene.

2. Fahrzeug nach Anspruch 1, **dadurch gekennzeichnet, daß** jeder Sockel (26, 40, 44) eine Bohrung zur Aufnahme einer Befestigungsschraube (28) am Boden (2) aufweist.

3. Fahrzeug nach einem der Ansprüche, **dadurch gekennzeichnet, dass** die Versteifungsbrücke (20) aus einem einzigen Stück besteht.

4. Fahrzeug nach Anspruch 3, **dadurch gekennzeichnet, daß** die Versteifungsbrücke (20) durch Gießen einer Aluminiumlegierung gebildet ist.

5. Fahrzeug nach einem der Ansprüche 1 bis 2, **dadurch gekennzeichnet, daß** die Versteifungsbrücke (20) aus mehreren zusammengesetzten Blechen gebildet ist.

6. Fahrzeug nach Anspruch 5, **dadurch gekennzeichnet, dass** die Versteifungsbrücke (20) einen oberen horizontalen Stab (22) umfasst, der aus einem ersten Blech gebildet ist und an jedem Ende an einem Pfosten (24) befestigt ist, der aus einem anderen Blech gebildet ist.

7. Fahrzeug nach Anspruch 6, **dadurch gekennzeichnet, dass** die obere Stange (22) und jeder Pfosten (24) ein längsgefaltetes Blech mit einem Teil aufweisen, das in einer vertikalen Ebene in Querrichtung des Fahrzeugs (30, 36) angeordnet ist, und a nach vorne weisender Abschnitt (32, 42).

8. Fahrzeug nach einem der Ansprüche 5 bis 7, **dadurch gekennzeichnet, daß** die Platten der Versteifungsbrücke (20) durch Schweißen zusammengefügt sind.

9. Fahrzeug nach einem der vorhergehenden Ansprüche, **dadurch gekennzeichnet, dass** die Versteifungsbrücke (20) in einer vertikalen Ebene oberhalb des vorstehenden Moduls (16) in Ausrichtung mit den Vorderflächen der Module an der Vorderseite der unteren Schicht angeordnet ist (10).

## Claims

1. Electric or hybrid vehicle equipped with a block (4) of battery modules (10, 12, 16) arranged under the rear boot, this block (4) comprising a lower layer of modules (10) receiving above a cooling (14) presenting a circulation of cooling fluid, this lower layer (10) fixed to a floor of the vehicle (2), extending in the middle of the vehicle by a projecting module (16) projecting from the block (4) in the direction front of the vehicle, **characterized in that** it comprises a stiffening bridge (20) arranged in the transverse direction of the vehicle, passing above the projecting module (16), the ends of which are fixed to the floor (2), this bridge stiffening (20) comprising on each side an upright (24) having a base (26, 40, 44) arranged in a horizontal plane.

2. Vehicle according to Claim 1, **characterized in that** each base (26, 40, 44) comprises a bore receiving a fixing screw (28) on the floor (2).

3. Vehicle according to any one of the claims, **characterized in that** the stiffening bridge (20) is formed by a single piece.

4. Vehicle according to Claim 3, **characterized in that** the stiffening bridge (20) is formed by casting an aluminum alloy.

5. Vehicle according to any one of Claims 1 to 2, **characterized in that** the stiffening bridge (20) is formed by several sheets assembled together.

6. Vehicle according to Claim 5, **characterized in that** the stiffening bridge (20) comprises an upper horizontal bar (22) formed in a first sheet, fixed at each end to an upright (24) formed by another sheet.

7. Vehicle according to Claim 6, **characterized in that** the upper bar (22) and each upright (24) comprise a sheet folded lengthwise, having a part disposed in a vertical plane in the transverse direction of the vehicle (30, 36), and a forward-facing portion (32, 42).

8. Vehicle according to any one of Claims 5 to 7, **characterized in that** the plates of the stiffening bridge (20) are assembled together by welding.

9. Vehicle according to any one of the preceding claims, **characterized in that** the stiffening bridge (20) is arranged in a vertical plane, above the projecting module (16), in alignment with the front faces of the modules at the front of the lower layer (10).
